# EUROPEAN PATENT SPECIFICATION

(11) **EP 3 845 471 B1**
(45) Date of publication and mention of the grant of the patent: **12.10.2022**
(21) Application number: 19938500.6
(22) Date of filing: 31.12.2019
(51) Int. Cl.: B65D 83/00, G07F 13/06, B65G 59/06

(54) **DISCHARGING MECHANISM, MATERIAL STORING DEVICE, AND SELF-SERVICE VENDING MACHINE**
MATERIALABFALLMECHANISMUS, MATERIALSPEICHERVORRICHTUNG, UND SELBSTBEDIENUNGSVERKAUFSAUTOMAT
MÉCANISME DE DÉCHARGEMENT DE MATÉRIAU, DISPOSITIF DE STOCKAGE DE MATÉRIAU, ET DISTRIBUTEUR AUTOMATIQUE EN LIBRE-SERVICE

(30) Priority: 23.07.2019 CN 201910666013
(43) Date of publication of application: 07.07.2021
(73) Proprietor: Cino Technology (Shenzhen) Limited, Shenzhen, Guangdong 518104 (CN)
(72) Inventor: LONG, Qiyi, Shenzhen Guangdong 518104 (CN); AN, Lishuang, Shenzhen Guangdong 518104 (CN); LONG, Qiren, Shenzhen Guangdong 518104 (CN)
(74) Representative: Petculescu, Ana-Maria
(86) International application number: PCT/CN2019/130798
(87) International publication number: WO 2021/012626

(56) References cited:
- WO-A1-2009/035845
- CN-A- 102 293 598
- CN-A- 110 510 265
- CN-U- 208 206 887
- DE-A1- 3 239 315
- JP-A- 2012 230 552
- JP-U- S5 241 700
- US-A- 1 742 371
- US-A- 2 000 008
- US-A- 3 071 292
- US-A- 5 806 725
- US-A1- 2017 356 553

## Description

### TECHNICAL FIELD

The present application relates to the technical field of material conveying technologies, and relates to a discharging mechanism. In addition, the present application further relates to a material storing device having the discharging mechanism, and a self-service vending machine having the discharging mechanism.

### BACKGROUND

Coffee is one of the three major beverages in the world, and people around the world are loving coffee more and more. Coffee machines are becoming more and more popular, which make the preparation of coffee more convenient and simpler, and the "coffee culture" is embodied in every moment of life.

With the popularity of vending devices in China, people may find vending devices for selling coffee in shopping malls, office buildings, and communities. These vending devices generally include a storage mechanism configured to store capsules, a discharging mechanism connected to the storage mechanism and configured to control regular falloff of the capsules, a transportation mechanism configured to transport capsules, and a brewing structure configured to brewing coffee. For example, JP 2012-230552A discloses a discharging mechanism according to the preamble of claim 1, in particular, the document provides a cup separation mechanism of a cooking type vending machine capable of quickly and surely separating the bottom cup from a cup stock one by one. In the cup separation mechanism, by moving the tip of the lower claw inward in the radial direction and the tip of the upper claw outward in the radial direction, the cup supported by the tip of the upper claw is dropped to the lower claw. By moving the tip of the lower claw outward in the radial direction and the tip of the upper claw inward in the radial direction, the second cup from the bottom is moved to the tip of the upper claw.

At present, the discharging mechanism in the vending device generally needs a plurality of power devices to drive opening and closing of a control valve to complete falloff and interception of the capsules, and prevent falloff of a plurality of capsules at one time. This discharging mechanism has a large number of parts, such that the connections between these parts are complicated, and thus the manufacture and assembling cost is high.

### SUMMARY

The invention is defined as stated in claim 1. Embodiments of the present application are intended to provide a discharging mechanism, a material storing device having the discharging mechanism, and a self-service vending machine having the discharging mechanism, to solve the technical problem that the conventional discharging mechanism has a large number of parts, and the manufacture and assembling cost is high.

To solve the above technical problem, the present application employs the technical solutions set out in the appended set of claims.

The present application achieves the following beneficial effects:

The discharging mechanism according to the embodiment of the present application is provided with a rotation member, a first guide module, and a second guide module. The rotation member is provided with a storage space configured to accommodate a capsule. The first guide module is configured to control the first valve module to close or open the feed hole when the rotation member rotates about an axial line. The second guide module is configured to control the second valve module to close or open the discharge hole when the rotation member rotates about the axial line.

The storage space is prefilled with a predetermined number of capsules. One valve module is opened while the other valve module is closed, such that the discharging mechanism only enables the capsules in the storage space to fall off rather than enabling the capsules exceeding the predetermined number (the capsules in addition to those accommodated in the storage space) to fall off.

As compared with discharging mechanism available in the market for use in a self-service vending machine, the discharging mechanism according to the present application causes the first valve module and the second valve module to be linked to the rotation member by arrangement of the first guide module and the second guide module, which implements falloff and interception of the capsules. In this way, the entire mechanism has fewer parts, and the manufacture and assembling cost is lower.

### BRIEF DESCRIPTION OF THE DRAWINGS

For clearer descriptions of the technical solutions according to the embodiments of the present application, drawings that are to be referred for description of the embodiments are briefly described hereinafter. Apparently, the drawings described hereinafter merely illustrate some embodiments of the present application. Persons of ordinary skill in the art may also derive other drawings based on the drawings described herein without any creative effort.
FIG. 1 is a schematic perspective view of a discharging mechanism in one direction according to one embodiment of the present application.
FIG. 2 is a schematic exploded view of the discharging mechanism in FIG. 1.
FIG. 3 is a top view of a rotation member in FIG. 2.
FIG. 4 is a bottom view of the rotation member in FIG. 2.
FIG. 5 is a schematic perspective view of a first end cover in FIG. 2 in one direction.
FIG. 6 is a schematic perspective view of a first baffle in FIG. 2 in one direction.
FIG. 7 is a schematic view of a first valve module when a first guide post is positioned at an end of a second portion distal from a first portion.
FIG. 8 is a schematic view of the first valve module when the first guide post is positioned at an end of the second portion proximal from the first portion.
FIG. 9 is a schematic view of the first valve module when the first guide post is positioned at an end of the first portion distal from the first portion.
FIG. 10 is a schematic perspective view of a second end cover in FIG. 2 in one direction.
FIG. 11 is a schematic perspective view of a second baffle in FIG. 2 in one direction.
FIG. 12 is a schematic view of a second valve module when a second guide post is positioned at an end of a third portion distal from a fourth portion.
FIG. 13 is a schematic view of the second valve module when the second guide post is positioned at an end of the third portion proximal to the fourth portion.
FIG. 14 is a schematic view of the second valve module when the second guide post is positioned at an end of the fourth portion distal from the third portion.
FIG. 15 is a schematic perspective view of a material storing device according to an embodiment of the present application.
FIG. 16 is a sectional view taken along an A-A line in FIG. 15.

### DETAILED DESCRIPTION

For better understanding of the present application, the present application is described in detail with reference to attached drawings and specific embodiments. It should be noted that, when an element is defined as "being secured or fixed to" another element, the element may be directly positioned on the element or one or more centered elements may be present therebetween. When an element is defined as "being connected or coupled to" another element, the element may be directly connected or coupled to the element or one or more centered elements may be present therebetween. As used herein, the terms "vertical", "horizontal", "left", "right", "inner", "outer", and similar expressions are only for illustration purposes.

Unless the context clearly requires otherwise, throughout the specification and the claims, technical and scientific terms used herein denote the meaning as commonly understood by a person skilled in the art. As used herein, the term "and/or" in reference to a list of two or more items covers all the following interpretations of the term: any of the items in the list, all the items in the list and any combination of the items in the list.

In the specification, the term "mount" includes fixing or retaining an element or member or device to a specific position or place by welding, threading, snapping, bonding or the like. The element or member or device may remain stationary in the specific position or place or may be movable within a specified range; and the element or member or device, after being fixed or retained to the specific position or place, may be detachable or not detachable, which are not limited in the embodiments of the present application.

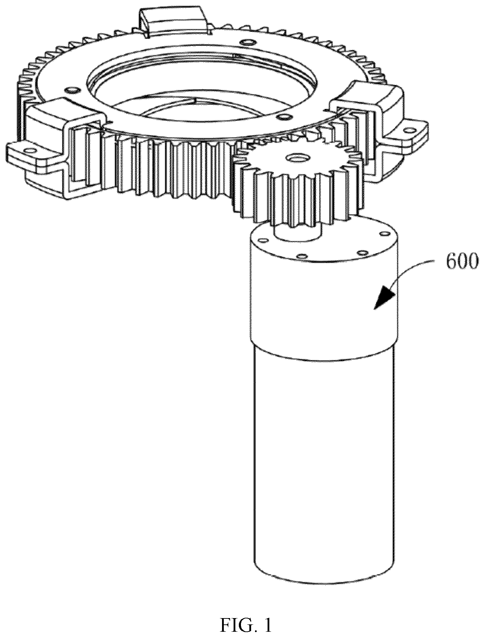

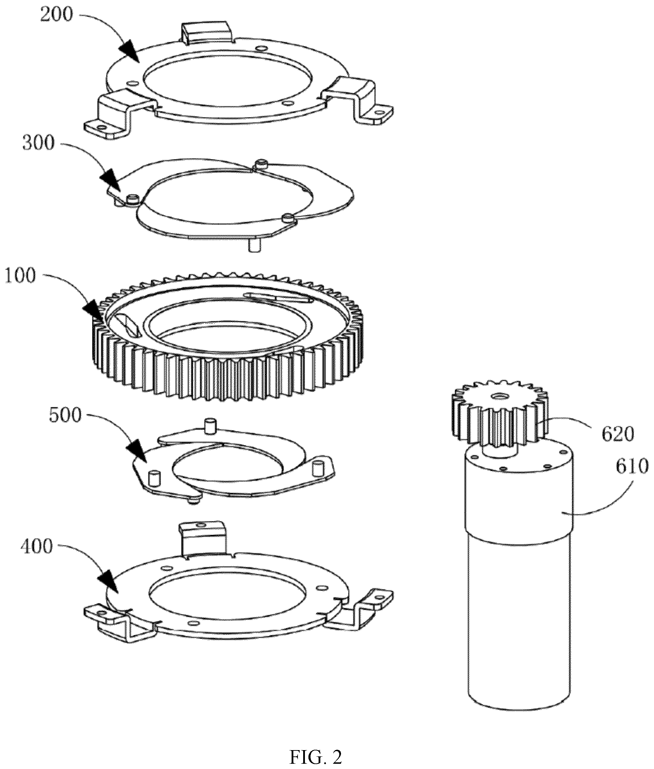

Referring to FIG. 1 and FIG. 2, a schematic perspective view and a schematic exploded view of a discharging mechanism in one direction according to an embodiment of the present application are illustrated. The discharging mechanism includes a rotation member 100, a first end cover 200, a first valve module 300, a second end cover 400, a second valve module 500, and a drive module 600.

The rotation member 100 is provided with a storage space configured to accommodate a capsule. The first end cover 200 and the second end cover 400 are respectively mounted at two ends of the rotation member 100, and are respectively provided with a feed hole and a discharge hole that are in communication with the storage space, the two end covers are securely connected, and the rotation member 100 is capable of rotating between the two end covers. The first valve module 300 is arranged between the rotation member 100 and the first end cover 200, and is configured to open or close the feed hole. The second valve module 500 is arranged between the rotation member 100 and the second end cover 400, and is configured to open or close the discharge hole. The drive module 600 is configured to drive the rotation member 100 to rotate between the two end covers.

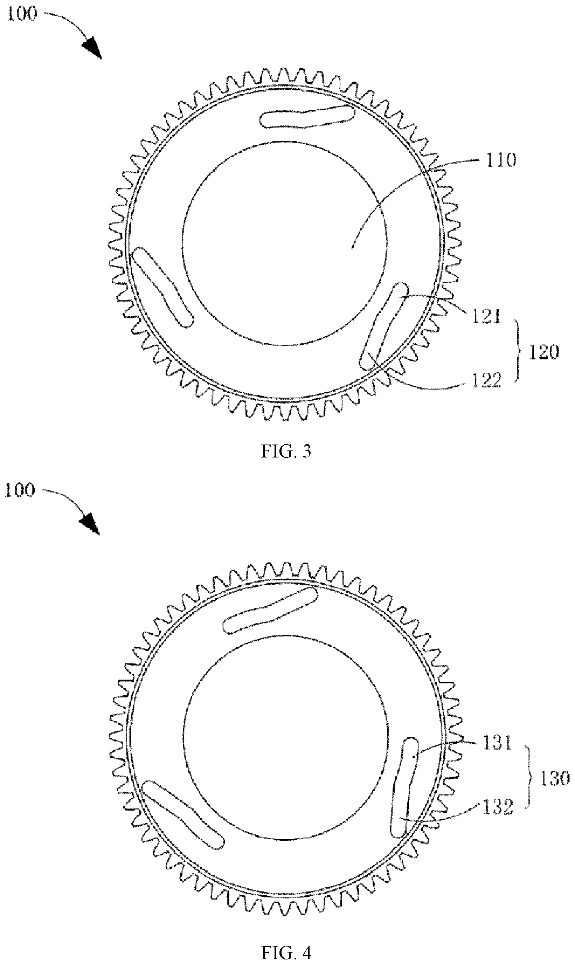

Referring to FIG. 3 and FIG. 4, schematic perspective views of the rotation member 100 in two directions are illustrated. Also referring to FIG. 1 and FIG. 2, the rotation member 100 is entirely in a cylindrical shape, and an axially penetrating storage space 110 is coaxially arranged at a center portion of the rotation member 100. Preferably, the storage space 110 is in a cylindrical shape.

An end of the rotation member 100 proximal to an end of the first end cover 200 is provided with a first sinking platform recessed towards the storage space, wherein the first valve module is positioned on the first sinking platform. An end of the rotation member 100 proximal to the second end cover 400 is provided with a second sinking platform recessed towards the storage space, wherein the second valve module is positioned on the second sinking platform.

An end of the rotation member 100 facing towards the first end cover 200 is provided with three first curved grooves 120, wherein the three first curved grooves 120 are arranged on the first sinking platform, and are uniformly spaced apart about an axial angle of the rotation member 100. The first curved groove 120 includes a first portion 121 that extends about a circumferential direction of the rotation member 100 to define an arc shape, and a second portion 122 that extends from an end of the first portion 121 towards a direction distal from the axial line of the rotation member 100. In this embodiment, the second portion 122 is in a straight-line shape which defines a specific included angle with a normal line of the first portion 121 proximal to an end of the second portion 122. In other embodiments of the present application, the second portion 122 may be in an arc shape if the second portion 122 extends towards an axial line of distal from the rotation member 100. Using the view angle in FIG. 2 as a reference, with reference to FIG. 3, one end of the first portion 121 proximal to the second portion 242 extends towards the other end thereof in a substantially counterclockwise direction.

An end of the rotation member 100 facing towards the second end cover 400 is provided with three second curved grooves 130, wherein the three second curved grooves 130 are arranged on the second sinking platform, and are uniformly spaced apart about an axial angle of the rotation member 100. Specifically, the second curved groove 130 includes a third portion 131 that extends about a circumferential direction of the rotation member 100 to define an arc shape, and a fourth portion 132 that extends from an end of the first portion 131 towards a direction distal from the axial line of the rotation member 100. In this embodiment, the fourth portion 132 is in a straight-line shape which defines a specific included angle with a normal line of the third portion 131 proximal to an end of the fourth portion 132. In other embodiments of the present application, the fourth portion 132 may be in an arc shape if the fourth portion 132 extends towards an axial line of distal from the rotation member 100. As illustrated in FIG. 4, one end of the third portion 131 proximal to the fourth portion 132 extends towards the other end thereof in a substantially counterclockwise direction. However, since the observation direction in FIG. 4 is reverse to the observation direction in FIG. 3, the direction from one end of the third portion 131 proximal to the fourth portion 132 to the other end thereof is rightly reverse to the direction from one end of the first portion 121 proximal to the second portion 122 to the other end thereof. In this paragraph, the term "reverse" may be understood as follows: in the above two directions, one is consistent with the rotation direction of the rotation member, and the other is opposite to the rotation direction of the rotation member.

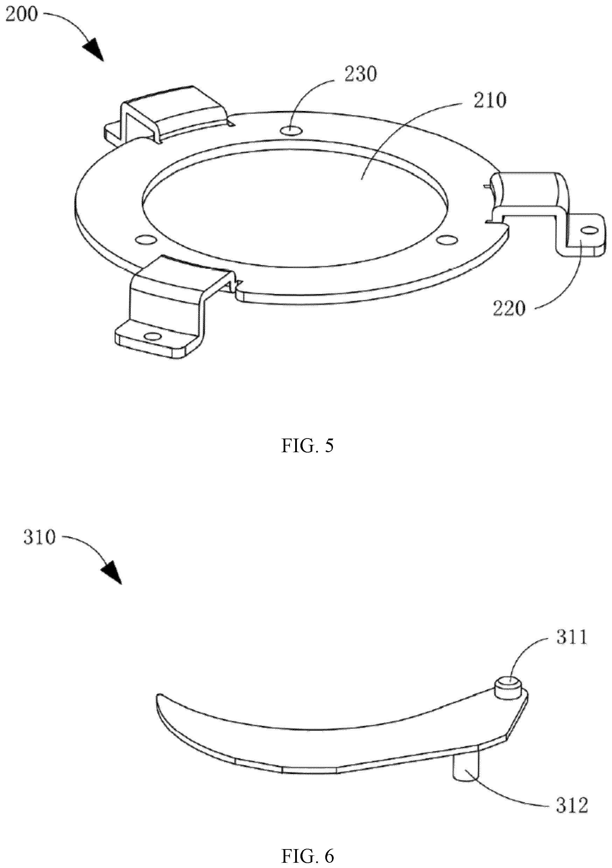

Referring to FIG. 5, a schematic perspective view of a first end cover 200 in one direction is illustrated. Also referring to FIG. 1 to FIG. 4, the first end cover 200 is entirely in a flat cylinder shape, wherein a middle portion thereof is provided with a penetrating feed hole 210. The first end cover 200 is mounted at the top of the rotation member 100. Preferably, the first end cover 200 and the rotation member 100 are coaxially arranged. The feed hole 210 is in communication with the storage space 110. Preferably, the feed hole 210 and the storage space 110 are coaxially arranged.

An end surface of the first end cover 200 facing towards the rotation member 100 is provided with three first shaft holes 230 extending parallelly to the storage space 110, wherein these three first shaft holes 230 are uniformly angularly spaced apart about a rotation axial line of the rotation member 100. Preferably, the first shaft hole 230 entirely penetrates through the first end cover 200.

An edge of the first end cover 220 is further provided with a plurality of first securing plates 220 extending towards the second end cover 400, wherein the first securing plate 220 is integrally in a Z shape. One end of the first securing plate 220 is secured to the edge of the first end cover 200, and the other end thereof extends towards the second end cover 400. The first securing plate 220 is configured to a second securing plate on the second end cover 400.

Referring to FIG. 6, a schematic perspective view of a first baffle in one direction is illustrated. Also referring to FIG. 1 to FIG. 5, the first valve module 300 is entirely arranged between the first end cover 200 and the rotation member 100, and includes three first baffles 310. The three first baffles 310 are likewise uniformly angularly spaced apart about a rotation axial line of the rotation member 100, and these three first baffles 310 one-to-one correspond to the first shaft hole 120 and the first curved groove 240.

The first baffle 310 is entirely in a flat sickle-shaped plate structure. An end of the first baffle 310 proximal to the first end cover 100 is provided with a first rotation shaft 311 mating with the first shaft hole 230. The first rotation shaft 311 is inserted into the first shaft hole 230 and is slidable about an axial line of the first shaft hole 230. Therefore, the first baffle 310 may be slidable with respect to the first end cover 200 under cooperation of the first rotation shaft 311 and the first shaft hole 230.

An end of the first baffle 311 proximal to the rotation member 100 is provided with a first guide post 312 mating with the first curved groove 120. The first guide post 312 is inserted into the first curved groove 120, and is relatively slidable along the first curved groove 120.

The first shaft holes 230 and the first curved grooves 120 constitute a first guide module configured to control the first valve module 300 to close or open the feed hole 210 when the rotation member 100 rotates.

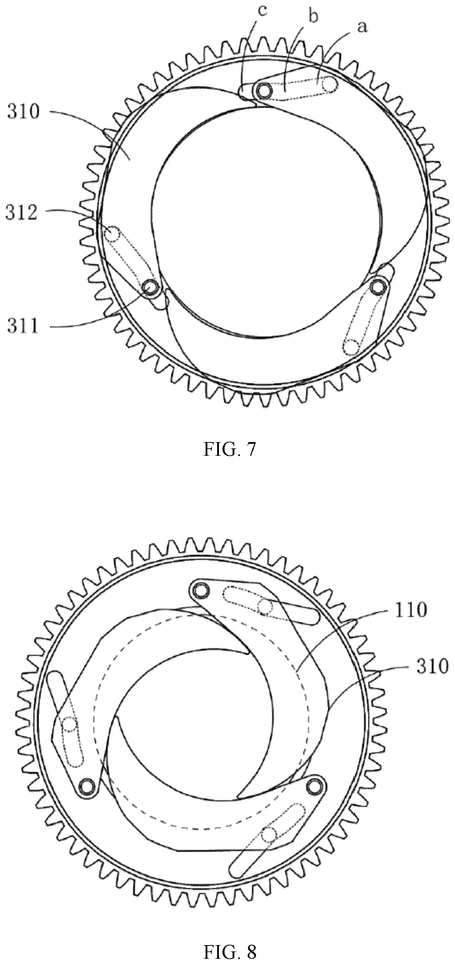

Referring to FIG. 7 to FIG. 9, a schematic view of the first valve module when the first guide post 312 is positioned at an end of the second portion 122 distal from the first portion 121, a schematic view of the first valve module when the first guide post 312 is positioned on an end of the second portion 122 proximal to the first portion 121, and a schematic view of the first valve module when the first guide post 312 is positioned at an end of the first portion 121 distal from the second portion 122 are illustrated. Hereinafter, with further reference to FIG. 1 to FIG. 6, the process of opening and closing the first valve module 300 is briefly described.

For ease of description, hereinafter, the end of the second portion 122 distal from the first portion 121 is referred to as "position a", and the end of the second portion 122 proximal to the first portion 121 and the end of the first portion 121 proximal to the second portion 122 are both referred to as "position b", and the end of the first portion 121 distal from the second portion 122 is referred to as "position c".

In an initial state, a specific phase difference is present between the first shaft hole 120 and the first guide groove 230, the first rotation shaft 311 on the first baffle 310 is positioned in the first shaft hole 120, and the first guide post 312 is positioned at position a in the first curved groove. In this case, each first baffle 310 is entirely at a periphery of the storage space, and the first valve module 300 is in the open state, which may be illustrated in FIG. 7.

After the rotation member 100 rotates clockwise (using the view angle in FIG. 2 as a reference) by a predetermined angle, the first curved groove 120 rotates with the rotation member 100 and is displaced; and the first guide post 312, in one aspect, rotates around an axial line of the first rotation shaft 311, and in another aspect, and in another aspect, relatively slides to position b in the first curved groove 120. In this course, since a side wall of the second portion 122 gradually drives the first baffle 310 to rotate clockwise about the first rotation shaft as the axial center, and a distance between the first guide post 312 and the axial line of the rotation member 100 gradually decreases, the first baffles 310 approaches the center of the storage space 100. In addition, when the first guide post 312 is at position b, each first baffle 310 at least partially shields the top profile of the storage space 100 to close the feed hole 210, and the first valve module 300 is in the closed state, which may be illustrated in FIG. 8. Preferably, when the first guide post 312 is at position b, adjacent first baffles 310 abut against each other.

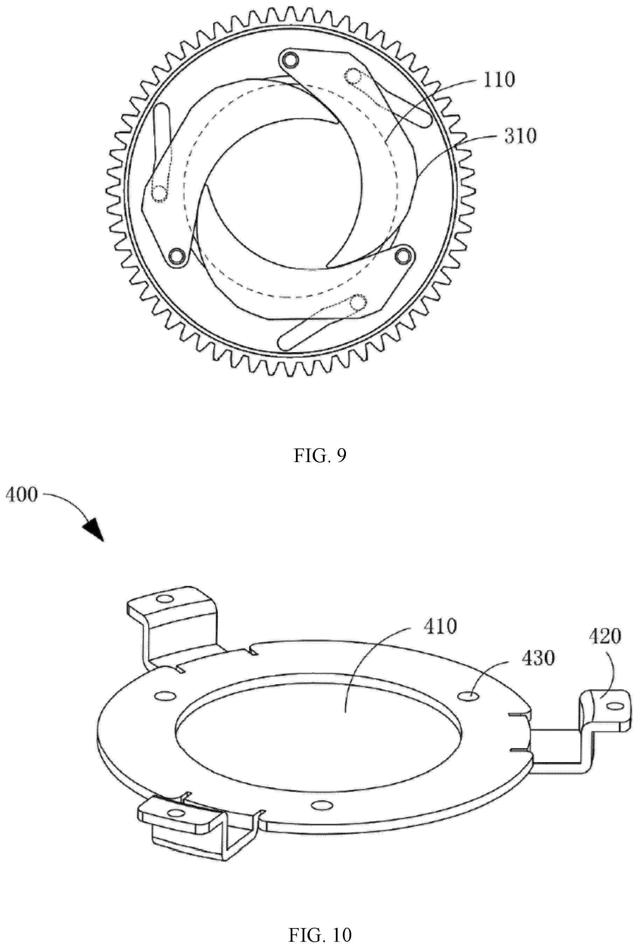

The rotation member 100 continues to clockwise (using the view angle in FIG. 2 as a reference) rotate until the first guide post 312 relatively slides to position c in the first curved groove 120. Since the first portion 121 is an arc groove structure with the axial line of the rotation member 121 as the center, during the process that the first guide post 312 relatively rotates, with the rotation member 100, from position b to position c, the first portion 241 may not abut against the first guide post 312. In this case, the first baffle 310 may not slide about the first rotation shaft 311 as an axial center under pushing of the side wall of the first curved groove 120. During the movement from position b to position c, the first valve module 300 is constantly in the closed state, which may be illustrated in FIG. 9.

In summary, when the rotation member 100 rotates, the first shaft hole 230, the first curved groove 120, the first rotation shaft 311, and the first guide post 312 cooperate with each other to control the first valve module 300 to open or close the storage space and the feed hole.

It should be understood that, even if the first shaft hole 230 in the above embodiments is arranged on the first end cover 200, in other embodiments of the present application, the first shaft hole may also be arranged on the end of the first end cover proximal to the rotation member, and correspondingly, the first curved groove may be arranged at the end of the rotation member proximal to the first end cover.

The second end cover 400 and the second valve module 500 are described hereinafter.

Referring to FIG. 10, a schematic perspective view of the second end cover 400 in one direction is illustrated. Also referring to FIG. 1 to FIG. 9, the second end cover 400 is entirely in a flat cylinder shape, wherein a middle portion thereof is provided with a penetrating feed hole 410. The second end cover 400 is mounted at the bottom of the rotation member 100. Preferably, the second end cover 400 and the rotation member 100 are coaxially arranged. The discharge hole 410 is in communication with the storage space 110. Preferably, the discharge hole 410 and the storage space 110 are coaxially arranged.

An end surface of the second end cover 400 facing towards the rotation member is provided with three second shaft holes 430 extending parallelly to the storage space 110, wherein these three second shaft holes 430 are uniformly angularly spaced apart about a rotation axial line of the rotation member 100. Preferably, the second shaft hole 430 penetrates through the second end cover 400.

An edge of the second end cover 400 is further provided with a plurality of second securing plates 420 extending towards the first end cover 200, wherein the second securing plate 420 is integrally in a Z shape. One end of the second securing plate 420 is secured to the edge of the second end cover 400, and the other end thereof extends towards the first end cover 200. The second securing plate 420 is configured to the first securing plate on 200 by a threaded fastening member. Nevertheless, the two securing plates may also be secured to each other in other fashions, such as a detectable connection fashion.

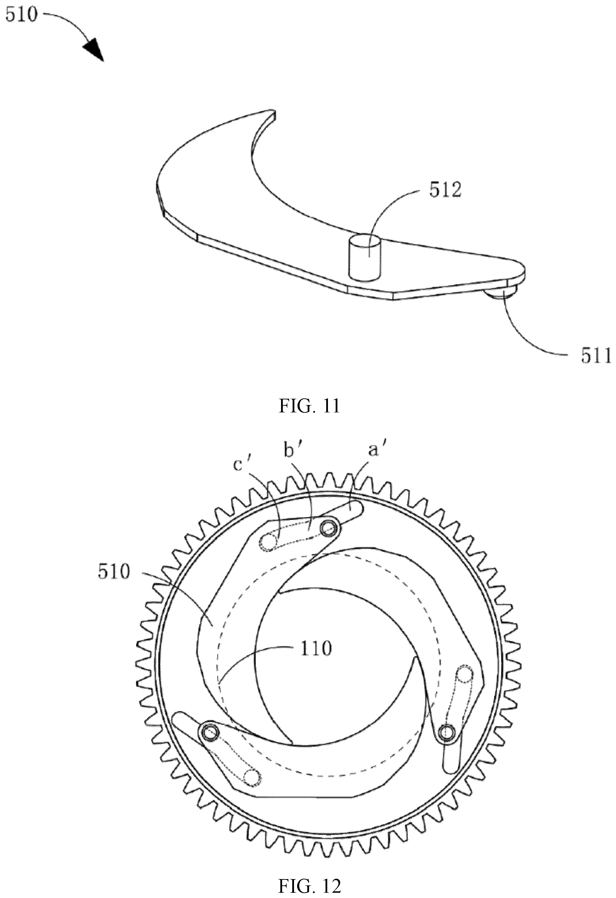

Referring to FIG. 11, a schematic perspective view of a second baffle in two directions is illustrated. Referring to FIG. 1 to FIG. 11, the second valve module 500 is entirely arranged between the second end cover 400 and the rotation member 100, and includes three second baffles 510. The three second baffles 510 are likewise uniformly angularly spaced apart about the rotation axial line of the rotation member 100, and these three second baffles 510 one-to-one correspond to the second shaft hole 430 and the second curved groove 130 as described hereinabove.

The second baffle 510 is entirely in a flat sickle-shaped plate structure. An end of the second baffle 510 proximal to the second end cover 400 is provided with a second rotation shaft 511 mating with the second shaft hole 430. The second rotation shaft 511 is inserted into the second shaft hole 430 and is slidable about an axial line of the second shaft hole 430. Therefore, the second baffle 510 may be slidable with respect to the second end cover 400 under cooperation of the second rotation shaft 511 and the second shaft hole 430.

An end of the second baffle 510 proximal to the rotation member 100 is provided with a second guide post 512 mating with the second curved groove 130. The second guide post 512 is inserted into the second curved groove 130, and is relatively slidable along the second curved groove 130.

The second shaft holes 430 and the second curved grooves 130 constitute a second guide module configured to control the second valve module 500 to close or open the discharge hole 410 when the rotation member 100 rotates. Referring to FIG. 12 to FIG. 14, a schematic view of the first valve module when the second guide post 512 is positioned at an end of third second portion 131 distal from the fourth portion 132, a schematic view of the first valve module when the first guide post 512 is positioned on an end of the third portion 131 proximal to the fourth portion 132, and a schematic view of the first valve module when the first guide post 512 is positioned at an end of the fourth portion 132 distal from the third portion 131 are illustrated. Hereinafter, with further reference to FIG. 1 to FIG. 11, the process of opening and closing the second valve module 500 is briefly described.

For ease of description, hereinafter, the end of the fourth portion 132 distal from the third portion 131 is referred to as "position a'", and the end of the fourth portion 132 proximal to the third portion 131 and the end of the third portion 131 proximal to the fourth portion 132 are both referred to as "position b'", and the end of the third portion 131 distal from the fourth portion 132 is referred to as "position c"'.

In an initial state (that is, as described above, the first guide post 312 is at position a, and the first valve module 300 is opened), a specific phase difference is present between the second curved groove 130 and the second shaft hole 430, the second slide block 511 on the second baffle 510 is positioned in the second shaft hole 430, and the second guide post 512 is positioned at position c' in the second curved groove. In this case, the second baffle 510 at least partially extends into a bottom profile of the storage space 110, and the second valve module 500 is in the closed state, which may be illustrated in FIG. 12. Preferably, adjacent second baffles 510 abut against each other.

After the rotation member 100 rotates clockwise (using the view angle in FIG. 2 as a reference, wherein if a reference is made to FIG. 12 to FIG. 14, the rotation is counterclockwise) by a predetermined angle , the first guide post is at position b, the first valve module 300 is closed, and meanwhile, the second guide post 512 slides from the third portion 131 of the second curved groove 130 to position b'.

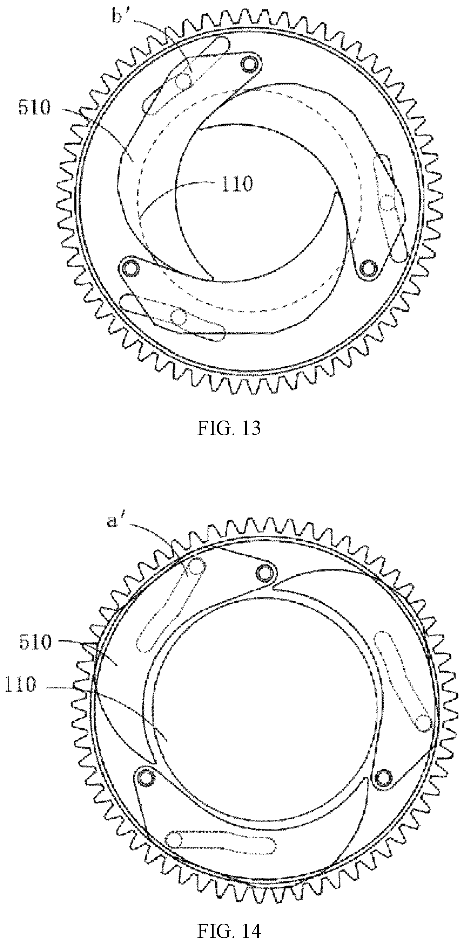

Since the third portion 441is an arc groove structure with the axial line of the rotation member 131 as the center, during the process that the second guide post 512 rotates, with the rotation member 100, from position c' to position b', the third portion 131 may not abut against the second guide post 512. In this case, the second baffle 510 may not rotate with the second rotation shaft as an axial center. During the movement from position c' to position b', the second valve module 500 is constantly in the closed state, which may be illustrated in FIG. 13.

The rotation member 100 continues to rotate clockwise (using the view angle in FIG. 2 as a reference, wherein if a reference is made to FIG. 12 to FIG. 14, the rotation is counterclockwise) until the first guide post 312 slides to position c, and meanwhile, the second guide post 512 moves, in the fourth portion, to position a'. During this process, the second baffle 510 rotates distally from the center of the storage space 110 with the axial line of the second rotation shaft 511 as the center under the effect of abutting against the side wall of the fourth portion 132, and a distance between the second guide post 512 and the axial line of the rotation member 100 increases gradually until the second baffle 510 is entirely detached from the bottom profile of the storage space 110 to open the discharge hole 410, and the second valve module 500 is in the open state, which may be illustrated in FIG. 14.

In summary, when the rotation member 100 rotates, the second shaft hole 430, the second curved groove 130, the second rotation shaft 511, and the second guide post 512 cooperate with each other to control the second valve module 500 to open or close the discharge hole 410.

It should be noted that, for implementation of the above process, it should be ensured that the phase angle by which the rotation member 100 rotates when the first guide post 312 relatively slides between the two ends (that is, between position a and position b) of the second portion 122 of the first curved groove 120 is equal to the phase angle by which the rotation member 100 rotates when the second guide post 512 relatively slides between the two ends (that is, between position c' and position b') of the third portion 131 of the second curved groove 130.

A phase angle by which the rotation member 100 rotates when the first guide post 312 relatively slides between two ends (that is, between position b and position c) of the first portion 121 of the first curved groove 120 is equal to a phase angle by which the rotation member 100 rotates when the second guide post 512 relatively slides between two ends (that is, between position b' and position a') of the fourth portion 132 of the second curved groove 130.

A phase angle by which the rotation member 100 rotates when the first guide post 312 relatively slides between two ends of the second portion 122 of the first curved groove 120 is equal to a phase angle by which the rotation member 100 rotates when the first guide post 312 relatively slides between two ends of the first portion 121 of the first curved groove 120. Further preferably, the first curved groove 120 and the second curved groove 130 have the same shape, but are different in the extending directions thereof. Such design facilitates molding of the curved grooves on the rotation member 100, and in addition, the two guide posts in the corresponding curved grooves may slide consistently. Further preferably, the phase angle is 30 degrees.

It should be understood that even if the second shaft hole 430 in the above embodiments is arranged on the second end cover 400, in other embodiments of the present application, the second shaft hole 430 may also be arranged on an end surface of the end of the rotation member 100 proximal to the second end cover 400, and correspondingly, the second curved groove 130 may be arranged at the end of the rotation member 100 proximal to the second end cover 400.

The drive module 600 is configured to drive the rotation member 100 to rotate about an axial line thereof. Specifically, the drive module 600 includes a motor 610 and a drive wheel 620. The drive wheel 620 is in mesh with the rotation member by gears. When the motor drives the drive wheel 620 to rotate, the rotation member 100 synchronously rotate under driving by the drive wheel 620. It may be understood that the drive module 600 is not limited to the combination of motor driving and gear driving in the above embodiment, and may be practiced in other fashions. For example, by a belt, a rack, a worm, or the like structure, rotation between the rotation member 100, and the first end cover 200 and the second end cover 400 may be implemented, which is not limited herein any further.

An operating process of controlling material discharging by the discharging mechanism is briefly described with reference to the accompanying drawings hereinafter.

Before material discharging, the discharging mechanism is in a state of storing the capsule. In this case, the first valve module 300 is in the open state, and the second valve module 500 is in the closed state. Correspondingly, the first guide post 312 is at position a, and the second guide post 512 is at position c'.

When a discharging process is desired, the drive module 600 drives the rotation member 100 to rotate clockwise. When the rotation member 100 moves until the first guide post 312 is at position b, the second guide post 512 is at position b'. In this case, the first valve module 300 is in the closed state to intercept the capsules over the storage space 110, and meanwhile the second valve module 500 is also in the closed state.

The drive module 600 continues to drive the rotation member 100 to rotate. When the guide post 312 is at position c, the second guide post 512 is at position a'. In this case, the first valve module 300 is in the closed state and may intercept the capsules over the storage space 110, and meanwhile the second valve module 500 is in the open state to release the capsules in the storage space 110.

Afterwards, the drive module 600 drives the rotation member to rotate reversely. When the first guide post 312 is at position b and the second guide post 512 is at position b', the first valve module 300 and the second valve module 500 are both in the closed state.

The drive module 600 drives the rotation member to continue to rotate to the initial position. In this case, the first guide post 312 is at position a and the second guide post 512 is at position c', such that the first valve module 300 is in the open state and the second valve module 500 is in the closed state to maintain the state of storing the capsules. Until now, a discharging process is complete. In this entire discharging process, at least one of the first valve module 300 and the second valve module 500 is in the closed state to prevent leakage of the capsules.

The discharging mechanism links the rotation member 100 to the first valve module 300 by the first guide module, and links the rotation member 100 to the second valve module 500 by the second guide module. While the rotation member 100 rotates, under the driving by the rotation member, by reverse movements, one of the first valve module 300 and the second valve module 500 is in the open state, and the other is in the closed state. In this way, falloff and interception of the capsules are smartly implemented.

The conventional discharging mechanism in the market mostly employ a solution of stepwise controlling two valve modules. In this solution, a first valve module needs to be firstly closed and the second valve module is opened to implement the discharging process, then the second valve module is closed, and afterwards the first valve module is opened such that the discharging mechanism is reset to a storage state. This discharging mechanism needs a plurality of power sources, and the entire discharging process takes a long time. However, the discharging mechanism according to the present application needs only one power device, and an entire discharging process may be implemented by a forward-reverse rotation process. This discharging mechanism has a shorter discharging cycle, and the user does not need to takes a long time to wait. In addition, the discharging mechanism has fewer parts, and the manufacture and assembling cost is lower.

In should be understood that in this embodiment, when the valve module is opened or closed, it is not necessary that the valve module absolutely covers or detaches from the end profile of the storage space (or the feed hole and the discharge hole). Instead, it is possible that the valve module partially covers or detaches from the end profile of the storage space (or the feed hole and the discharge hole), which may apply if the capsules are intercepted or released.

It should be understood that, the present application sets no limitation to the number of baffles included in the first valve module and the second valve module. For example, when the first baffle has a sufficiently large area, the first baffle may accommodate the use requirements. However, since when the area of the baffle is over-large, the rotation of the rotation member is not balanced, the number of baffles is preferably more than two. In addition, the more than two baffles are symmetrically arranged to ensure a balance of movement and motionlessness.

It should be noted that the discharging mechanism may be not only employed to store and drop the capsules, but also employed to store materials other than the capsules.

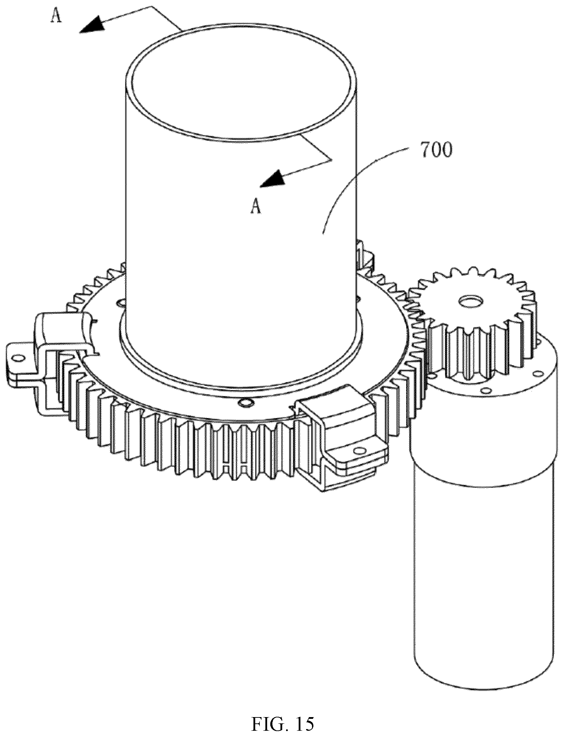

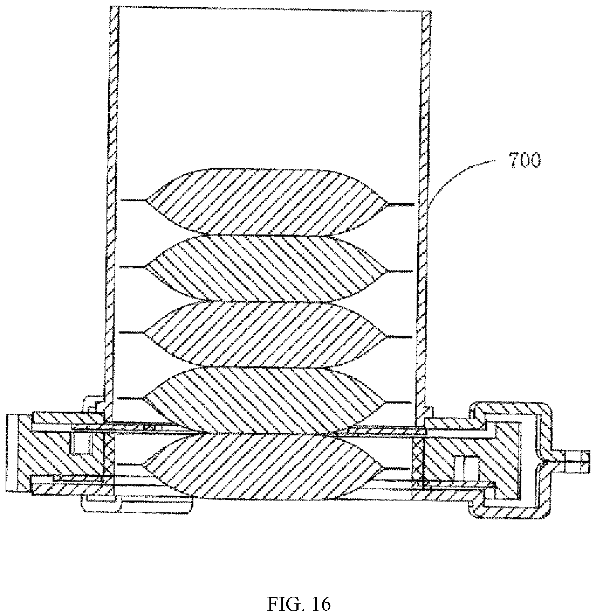

Referring to FIG. 15 and FIG. 16, the present application further provides a material storing device. The material storing device includes a barrel 700 configured to accommodate capsules, and the discharging mechanism as described above. Also referring to FIG. 1 to FIG. 14, the discharging mechanism is secured to an end of the barrel 700, and a port at an end of the barrel is in communication with the feed hole. Preferably, the barrel 700 and the feed hole are coaxially arranged.

The material storing device includes the discharging mechanism as described above, and has a shorter discharging cycle over the conventional material storing device available in the market. Therefore, the user does not need to take a long time to wait. In addition, the material storing device has fewer parts, and the manufacture and assembling cost is lower.

The present application further provides a self-service vending machine. The self-service vending machine includes the material storing device as described above.

The self-service vending machine includes the discharging mechanism as described above, and has a shorter discharging cycle over the conventional self-service vending machine available in the market. Therefore, the user does not need to take a long time to wait. In addition, the self-service vending machine entirely has fewer parts, and the manufacture and assembling cost is lower.

## Claims

1. A discharging mechanism, comprising:
a rotation member (100), provided with a storage space (110) penetrating through the rotation member;
a first end cover (200), mounted at one end of the rotation member (100), the first end cover (200) being provided with a feed hole (210) in communication with one end of the storage space (110);
a second end cover (400), mounted at the other end of the rotation member, the second end cover being provided with a discharge hole (410) in communication with the other end of the storage space, wherein the rotation member (110) is rotatable with respect to the first end cover (200) and the second end cover (400), and the first end cover (200) and the second end cover (400) are fixed;
a first valve module (300), arranged between the first end cover (200) and the rotation member (100);
a second valve module (500), arranged between the second end cover (400) and the rotation member (100);
a first guide module, configured to control the first valve module (300) to close or open the feed hole (210) when the rotation member (100) rotates; and
a second guide module, configured to control the second valve module (500) to close or open the discharge hole (410) when the rotation member (100) rotates;
wherein when one of the first valve module (300) and the second valve module (500) is in an open state, the other of the first valve module (300) and the second valve module (500) is in a closed state;
wherein the first guide module comprises a first shaft hole (230) and a first curved groove (120), wherein the first shaft hole (230) is positioned on an end surface at an end of the first end cover (200) facing towards the rotation member (100) and the first curved groove (120) is positioned on an end surface at an end of the rotation member (100) facing towards the first end cover (200), or the first shaft hole (230) is positioned on an end surface at an end of the rotation member (100) facing towards the first end cover (200) and the first curved groove (120) is positioned on an end surface at an end of the first end cover (200) facing towards the rotation member (100); and
wherein the first valve module (300) comprises a first baffle (310), the first baffle (310) is provided with a first rotation shaft (311) and a first guide post (312), wherein the first rotation shaft (311) is inserted into the first shaft hole (230) and the first rotation shaft (311) is rotatable about an axial line of the first shaft hole (230), the first guide post (312) is inserted into the first curved groove (120) and the first guide post (312) is slidable along the first curved groove (120), and when the rotation member (100) rotates, the first shaft hole (230), the first curved groove (120), the first rotation shaft (311), and the first guide post (312) cooperate with each other to control the first valve module (300) to open or close the feed hole (210);
**characterized in that** the first curved groove (120) comprises a first portion (121) circumferentially extending along the rotation member (100) to define an arc shape, and a second portion (122) extending from an end of the first portion (121) towards a direction distal from a rotation axial line of the rotation member (100).

2. The discharging mechanism according to claim 1, wherein a first securing plate (220) extends from the first end cover (200), and a second securing plate (420) extends from the second end cover (400), the first securing plate (220) and the second securing plate (420) being secured in a detachable fashion.

3. The discharging mechanism according to claim 1, wherein an end surface at an end of the rotation member (100) proximal to the first end cover (200) is recessed towards the storage space (110) to define a first sinking platform surrounding the storage space (110), and the first valve module (300) is positioned on the first sinking platform.

4. The discharging mechanism according to claim 1, wherein an end surface at an end of the rotation member (100) proximal to the second end cover (400) is recessed towards the storage space (110) to define a second sinking platform surrounding the storage space (110), and the second valve module (500) is positioned on the second sinking platform.

5. The discharging mechanism according to claim 1, wherein distances between two end portions of the first curved groove (120) and an axial line of the storage space (110) are different.

6. The discharging mechanism according to claim 1, wherein the number of first baffles (310), the number of first shaft holes (230), and the number of first curve grooves (120) are all at least three; and
the first baffle (310), the first shaft hole (230), and the first curved groove (120) one-to-one correspond to each other, the at least three first shaft holes (230) are uniformly spaced apart about a rotation axial angle of the rotation member (100), and the at least three first curved grooves (120) are uniformly spaced apart about the rotation axial angle of the rotation member (100).

7. The discharging mechanism according to any one of claims 1 to 4, wherein the second guide module comprises a second shaft hole (430) and a second curved groove (130), wherein the second shaft hole (430) is positioned on an end surface at an end of the second end cover (400) facing towards the rotation member (100) and the second curved groove (130) is positioned on an end surface at an end of the rotation member (100) facing towards the second end cover (400), or the second shaft hole (430) is positioned on an end surface at an end of the rotation member (100) facing towards the second end cover (400) and the second curved groove (130) is positioned on an end surface at an end of the second end cover (400) facing towards the rotation member (100); and
the second valve module (500) comprises a second baffle (510), the second baffle (510) being provided with a second rotation shaft (511) and a second guide post (512), wherein the second rotation shaft (511) is inserted into the second shaft hole (430) and the second rotation shaft (511) is rotatable about an axial line of the second shaft hole (430), the second guide post (512) is inserted into the second curved groove (130) and the second guide post (512) is slidable along the second curved groove (130), and when the rotation member (100) rotates, the second shaft hole (430), the second curved groove (130), the second rotation shaft (511), and the second guide post (512) cooperate with each other to control the second valve module (500) to open or close the discharge hole (410).

8. The discharging mechanism according to claim 7, wherein distances between two end portions of the second curved groove (130) and an axial line of the storage space (110) are different.

9. A material storing device, **characterized by** comprising a barrel (700) and the discharging mechanism as defined in any one of claims 1 to 8; wherein the discharging mechanism is secured to an end of the barrel (700), and a port at an end of the barrel (700) proximal to the discharging mechanism is in communication with the feed hole (210).

10. A self-service vending machine, **characterized by** comprising the discharging mechanism as defined in any one of claims 1 to 8.

## Patentansprüche

1. Abgabemechanismus, umfassend:
ein Drehelement (100), das mit einem Aufnahmeraum (110) versehen ist, der durch das Drehelement verläuft;
eine erste Endabdeckung (200), die an dem einen Ende des Drehelements (100) angebracht ist, wobei die erste Endabdeckung (200) mit einem Zuführloch (210) in Verbindung mit einem Ende des Aufnahmeraums (110) versehen ist;
eine zweite Endabdeckung (400), die an dem anderen Ende des Drehelements angebracht ist, wobei die zweite Endabdeckung mit einem Abgabeloch (410) in Verbindung mit dem anderen Ende des Aufnahmeraums versehen ist, wobei das Drehelement (110) in Bezug auf die erste Endabdeckung (200) und die zweite Endabdeckung (400) drehbar ist und die erste Endabdeckung (200) und die zweite Endabdeckung (400) fixiert sind;
ein erstes Ventilmodul (300), das zwischen der ersten Endabdeckung (200) und dem Drehelement (100) angeordnet ist;
ein zweites Ventilmodul (500), das zwischen der zweiten Endabdeckung (400) und dem Drehelement (100) angeordnet ist;
ein erstes Führungsmodul, das dazu konfiguriert ist, das erste Ventilmodul (300) so zu steuern, dass es das Zuführloch (210) schließt oder öffnet, wenn sich das Drehelement (100) dreht; und
ein zweites Führungsmodul, das dazu konfiguriert ist, das zweite Ventilmodul (500) so zu steuern, dass es das Abgabeloch (410) schließt oder öffnet, wenn sich das Drehelement (100) dreht;
wobei, wenn sich eins von dem ersten Ventilmodul (300) und dem zweiten Ventilmodul (500) in einem geöffneten Zustand befindet, sich das andere von dem ersten Ventilmodul (300) und dem zweiten Ventilmodul (500) in einem geschlossenen Zustand befindet;
wobei das erste Führungsmodul ein erstes Schaftloch (230) und eine erste gekrümmte Nut (120) umfasst, wobei das erste Schaftloch (230) an einer Endfläche an einem Ende der ersten Endabdeckung (200) angeordnet ist, das dem Drehelement (100) zugewandt ist, und die erste gekrümmte Nut (120) an einer Endfläche an einem Ende des Drehelements (100) angeordnet ist, das der ersten Endabdeckung (200) zugewandt ist, oder das erste Schaftloch (230) an einer Endfläche an einem Ende des Drehelements (100) angeordnet ist, das der ersten Endabdeckung (200) zugewandt ist, und die erste gekrümmte Nut (120) an einer Endfläche an einem Ende der ersten Endabdeckung (200) angeordnet ist, das dem Drehelement (100) zugewandt ist; und
wobei das erste Ventilmodul (300) eine erste Trennplatte (310) umfasst, wobei die erste Trennplatte (310) mit einer ersten Drehachse (311) und einem ersten Führungspfosten (312) versehen ist, wobei die erste Drehachse (311) in das erste Schaftloch (230) eingeführt ist und die erste Drehachse (311) um eine Achse des ersten Schaftlochs (230) drehbar ist, der erste Führungspfosten (312) in die erste gekrümmte Nut (120) eingeführt ist und der erste Führungspfosten (312) in der ersten gekrümmten Nut (120) gleiten kann, und wenn das Drehelement (100) sich dreht, das erste Schaftloch (230), die erste gekrümmte Nut (120), die erste Drehachse (311) und der erste Führungspfosten (312) zusammenwirken, um das erste Ventilmodul (300) so zu steuern, dass es das Zuführloch (210) öffnet oder schließt;
**dadurch gekennzeichnet, dass** die erste gekrümmte Nut (120) einen ersten Abschnitt (121), der sich in Umfangsrichtung am Drehelement (100) erstreckt und eine Bogenform definiert, und einen zweiten Abschnitt (122) umfasst, der sich von einem Ende des ersten Abschnitts (121) in einer Richtung weg von einer Drehachse des Drehelements (100) erstreckt.

2. Abgabemechanismus nach Anspruch 1, wobei sich eine erste Befestigungsplatte (220) von der ersten Endabdeckung (200) erstreckt und sich eine zweite Befestigungsplatte (420) von der zweiten Endabdeckung (400) erstreckt, wobei die erste Befestigungsplatte (220) und die zweite Befestigungsplatte (420) lösbar befestigt sind.

3. Abgabemechanismus nach Anspruch 1, wobei eine Endfläche an einem Ende des Drehelements (100) nahe der ersten Endabdeckung (200) in Richtung des Aufnahmeraums (110) vertieft ist und eine erste Senkplattform definiert, die den Aufnahmeraum (110) umgibt, und das erste Ventilmodul (300) an der ersten Senkplattform angeordnet ist.

4. Abgabemechanismus nach Anspruch 1, wobei eine Endfläche an einem Ende des Drehelements (100) nahe der zweiten Endabdeckung (400) in Richtung des Aufnahmeraums (110) vertieft ist und eine zweite Senkplattform definiert, die den Aufnahmeraum (110) umgibt, und das zweite Ventilmodul (500) an der zweiten Senkplattform angeordnet ist.

5. Abgabemechanismus nach Anspruch 1, wobei Abstände zwischen zwei Endabschnitten der ersten gekrümmten Nut (120) und einer Achse des Aufnahmeraums (110) unterschiedlich sind.

6. Abgabemechanismus nach Anspruch 1, wobei die Anzahl der ersten Trennplatten (310), die Anzahl der ersten Schaftlöcher (230) und die Anzahl der ersten gekrümmten Nuten (120) jeweils wenigstens drei beträgt; und
die erste Trennplatte (310), das erste Schaftloch (230), und die erste gekrümmte Nut (120) miteinander in Eins-zu-eins-Beziehung stehen, die wenigstens drei ersten Schaftlöcher (230) gleichmäßig um einen Rotationsachsenwinkel des Drehelements (100) beabstandet sind und die wenigstens drei ersten gekrümmten Nuten (120) gleichmäßig um den Rotationsachsenwinkel des Drehelements (100) beabstandet sind.

7. Abgabemechanismus nach einem der Ansprüche 1 bis 4, wobei das zweite Führungsmodul ein zweites Schaftloch (430) und eine zweite gekrümmte Nut (130) umfasst, wobei das zweite Schaftloch (430) an einer Endfläche an einem Ende der zweiten Endabdeckung (400) angeordnet ist, das dem Drehelement (100) zugewandt ist, und die zweite gekrümmte Nut (130) an einer Endfläche an einem Ende des Drehelements (100) angeordnet ist, das der zweiten Endabdeckung (400) zugewandt ist, oder das zweite Schaftloch (430) an einer Endfläche an einem Ende des Drehelements (100) angeordnet ist, das der zweiten Endabdeckung (400) zugewandt ist, und die zweite gekrümmte Nut (130) an einer Endfläche an einem Ende der zweiten Endabdeckung (400) angeordnet ist, das dem Drehelement (100) zugewandt ist; und
wobei das zweite Ventilmodul (500) eine zweite Trennplatte (510) umfasst, wobei die zweite Trennplatte (510) mit einer zweiten Drehachse (511) und einem ersten Führungspfosten (512) versehen ist, wobei die zweite Drehachse (511) in das zweite Schaftloch (430) eingeführt ist und die zweite Drehachse (511) um eine Achse des zweiten Schaftlochs (430) drehbar ist, der zweite Führungspfosten (512) in die zweite gekrümmte Nut (130) eingeführt ist und der zweite Führungspfosten (512) in der zweiten gekrümmten Nut (130) gleiten kann, und wenn das Drehelement (100) sich dreht, das zweite Schaftloch (430), die zweite gekrümmte Nut (130), die zweite Drehachse (511) und der zweite Führungspfosten (512) zusammenwirken, um das zweite Ventilmodul (500) so zu steuern, dass es das Zuführloch (410) öffnet oder schließt.

8. Abgabemechanismus nach Anspruch 7, wobei Abstände zwischen zwei Endabschnitten der zweiten gekrümmten Nut (130) und einer Achse des Aufnahmeraums (110) unterschiedlich sind.

9. Materialaufnahmevorrichtung, **gekennzeichnet durch** eine Trommel (700) und das Abgabemechanismus nach einem der Ansprüche 1 bis 8; wobei der Abgabemechanismus an einem Ende der Trommel (700) befestigt ist und eine Öffnung an einem Ende der Trommel (700) nahe dem Abgabemechanismus mit dem Zuführloch (210) in Verbindung steht.

10. Verkaufsautomat, **gekennzeichnet durch** den Abgabemechanismus nach einem der Ansprüche 1 bis 8.

## Revendications

1. Un mécanisme de déchargement, comprenant :
un élément rotatif (100), muni d'un espace de stockage (110) pénétrant à travers l'élément rotatif ;
un premier couvercle d'extrémité (200), monté à une extrémité de l'élément rotatif (100), le premier couvercle d'extrémité (200) étant muni d'un trou d'alimentation (210) communicant avec une extrémité de l'espace de stockage (110);
un deuxième couvercle d'extrémité (400), monté à l'autre extrémité de l'élément rotatif, le deuxième couvercle d'extrémité étant muni d'un trou de déchargement (410) communicant avec l'autre extrémité de l'espace de stockage, dans lequel l'élément rotatif (110) peut pivoter par rapport au premier couvercle d'extrémité (200) et au deuxième couvercle d'extrémité (400), et le premier couvercle d'extrémité (200) et le deuxième couvercle d'extrémité (400) sont fixes ;
un premier module de vanne (300), agencé entre le premier couvercle d'extrémité (200) et l'élément rotatif (100) ;
un deuxième module de vanne (500), agencé entre le deuxième couvercle d'extrémité (400) et l'élément rotatif (100) ;
un premier module de guidage, configuré pour commander au premier module de vanne (300) l'ouverture ou la fermeture du premier trou d'alimentation (210) lorsque l'élément rotatif (100) pivote ; et
un deuxième module de guidage, configuré pour commander au deuxième module de vanne (500) l'ouverture ou la fermeture du trou de déchargement (410) lorsque l'élément rotatif (100) pivote ;
dans lequel lorsque l'un parmi le premier module de vanne (300) et le deuxième module de vanne (500) est à l'état ouvert, l'autre parmi le premier module de vanne (300) et le deuxième module de vanne (500) est à l'état fermé ;
dans lequel le premier module de guidage comprend un premier trou d'arbre (230) et une première gorge courbe (120), dans lequel le premier trou d'arbre (230) est positionné sur une surface d'extrémité à une extrémité du premier couvercle d'extrémité (200) faisant face à l'élément rotatif (100) et la première gorge courbe (120) est positionnée sur une surface d'extrémité à une extrémité de l'élément rotatif (100) faisant face au premier couvercle d'extrémité (200), ou le premier trou d'arbre (230) est positionné sur une surface d'extrémité à une extrémité de l'élément rotatif (100) faisant face au premier couvercle d'extrémité (200) et la première gorge courbe (120) est positionnée sur une surface d'extrémité à une extrémité du premier couvercle d'extrémité (200) faisant face à l'élément rotatif (100) ; et
dans lequel le premier module de vanne (300) comprend un premier déflecteur (310), le premier déflecteur (310) est muni d'un premier arbre de rotation (311) et d'une première tige de guidage (312), dans lequel le premier arbre de rotation (311) est inséré dans le premier trou d'arbre (230) et le premier arbre de rotation (311) peut pivoter sur la ligne axiale du premier trou d'arbre (230), la première tige de guidage (312) est insérée dans la première gorge courbe (120) et la première tige de guidage (312) peut coulisser le long de la première gorge courbe (120), et lorsque l'élément rotatif (100) pivote, le premier trou d'arbre (230), la première gorge courbe (120), le premier arbre de rotation (311), et la première tige de guidage (312) coopèrent mutuellement pour commander au premier module de vanne (300) l'ouverture ou la fermeture du trou d'alimentation (210) ;
**caractérisé en ce que** la première gorge courbe (120) comprend une première portion (121) se prolongeant de manière circonférentielle le long de l'élément rotatif (100) pour définir une forme d'arc, et une deuxième portion (122) se prolongeant depuis l'extrémité de la première portion (121) dans un sens distal de la ligne axiale de rotation de l'élément rotatif (100).

2. Un mécanisme de déchargement, selon la revendication 1, dans lequel une première plaque de sécurisation (220) se prolonge depuis le premier couvercle d'extrémité (200), et une deuxième plaque de sécurisation (420) se prolonge depuis le deuxième couvercle d'extrémité (400), la première plaque de sécurisation (220) et la deuxième plaque de sécurisation (420) étant sécurisée de manière détachable.

3. Un mécanisme de déchargement, selon la revendication 1, dans lequel une surface d'extrémité à une extrémité de l'élément rotatif (100) proximale du premier couvercle d'extrémité (200) est enfoncée vers l'espace de stockage (110) pour définir une première plateforme renfoncée entourant l'espace de stockage (110), et le premier module de vanne (300) est positionné sur la première plateforme renfoncée.

4. Un mécanisme de déchargement, selon la revendication 1, dans lequel une surface d'extrémité à une extrémité de l'élément rotatif (100) proximale deuxième couvercle d'extrémité (400) est enfoncée vers l'espace de stockage (110) pour définir une deuxième plateforme renfoncée entourant l'espace de stockage (110), et le deuxième module de vanne (500) est positionné sur la deuxième plateforme renfoncée.

5. Un mécanisme de déchargement, selon la revendication 1, dans lequel les distances entre les deux portions d'extrémité de la première gorge courbe (120) et la ligne axiale de l'espace de stockage (110) sont différentes.

6. Un mécanisme de déchargement, selon la revendication 1, dans lequel le nombre de premiers déflecteurs (310), le nombre de premiers trous d'arbres (230), et le nombre de premières gorges courbes (120) sont tous au moins de trois ; et
le premier déflecteur (310), le premier trou d'arbre (230), et la première gorge courbe (120) correspondent mutuellement un-à-un, les au moins trois premiers trous d'arbre (230) sont espacés de manière homogène à environ un angle axial de rotation de l'élément rotatif (100), et les au moins trois gorges courbes (120) sont espacées de manière homogène à environ un angle axial de rotation de l'élément rotatif (100).

7. Un mécanisme de déchargement, selon l'une quelconque des revendications 1 à 4, dans lequel le deuxième module de guidage comprend un deuxième trou d'arbre (430) et une deuxième gorge courbe (130), dans lequel le deuxième trou d'arbre (430) est positionné sur une surface d'extrémité à une extrémité du deuxième couvercle d'extrémité (400) faisant face à l'élément rotatif (100) et la deuxième gorge courbe (130) est positionnée sur une surface d'extrémité à une extrémité de l'élément rotatif (100) faisant face au deuxième couvercle d'extrémité (400), ou le deuxième trou d'arbre (430) est positionné sur une surface d'extrémité à une extrémité de l'élément rotatif (100) faisant face au deuxième couvercle d'extrémité (400) et la deuxième gorge courbe (130) est positionnée sur une surface d'extrémité à une extrémité du deuxième couvercle d'extrémité (400) faisant face à l'élément rotatif (100) ; et
le deuxième module de vanne (500) comprend un deuxième déflecteur (510), le deuxième déflecteur (510) étant muni d'un deuxième arbre rotatif (511) et d'une deuxième tige de guidage (512), dans lequel le deuxième arbre rotatif (511) est inséré dans le deuxième trou d'arbre (430) et le deuxième arbre rotatif (511) peut pivoter selon la ligne axiale du deuxième trou d'arbre (430), la deuxième tige de guidage (512) est insérée dans la deuxième gorge courbe (130) et la deuxième tige de guidage (512) peut coulisser le long de la deuxième gorge courbe (130), et lorsque l'élément rotatif (100) pivote, le deuxième trou d'arbre (430), la deuxième gorge courbe (130), le deuxième arbre rotatif (511), et la deuxième tige de guidage (512) coopèrent mutuellement pour commander au deuxième module de vanne (500) l'ouverture ou la fermeture du trou de déchargement (410).

8. Un mécanisme de déchargement, selon la revendication 7, dans lequel les distances entre les deux portions d'extrémité de la deuxième gorge courbe (130) et la ligne axiale de l'espace de stockage (110) sont différentes.

9. Un dispositif de stockage de matériel, **caractérisé en ce qu'**il comprend corps cylindrique (700) et le mécanisme de déchargement tel que défini à l'une quelconque des revendications 1 à 8 ; dans lequel le mécanisme de déchargement est sécurisé à une extrémité du corps cylindrique (700), et un port à une extrémité du corps cylindrique (700) proximale du mécanisme de déchargement communique avec le trou d'alimentation (210).

10. Un distributeur automatique en libre-service, **caractérisé en ce qu'**il comprend le mécanisme de déchargement tel que défini à l'une quelconque des revendications 1 à 8.
